Europäisches Patentamt

(19) European Patent Office

Office européen des brevets

(11) Publication number: **0 050 039**
**B1**

(12) **EUROPEAN PATENT SPECIFICATION** ,

(45) Date of publication of patent specification: **17.09.86**

(21) Application number: **81304766.9**

(22) Date of filing: **13.10.81**

(51) Int. Cl.⁴: **C 08 J 3/12, C 08 L 23/16**

(54) **Elastomeric composition and process for producing the same.**

(30) Priority: **13.10.80 IT 2526580**

(43) Date of publication of application:
**21.04.82 Bulletin 82/16**

(45) Publication of the grant of the patent:
**17.09.86 Bulletin 86/38**

(84) Designated Contracting States:
**BE DE FR GB NL**

(56) References cited:
**FR-A-1 534 717**
**FR-A-2 093 589**
**GB-A- 950 218**
**GB-A-1 022 628**
**US-A-3 361 850**
**US-A-3 927 166**

The file contains technical information
submitted after the application was filed and
not included in this specification

(73) Proprietor: **Montedison S.p.A.**
**Patents & Licensing Dept. Foro Buonaparte, 31**
**P.O. Box 10528**
**I-20121 Milan (IT)**

(72) Inventor: **Milani, Federico**
**247 C1,Via Eridania**
**S.Maria Maddalena (Rovigo) (IT)**
Inventor: **Foschi, Sergio**
**43 Via Germoglio**
**44100 Ferrara (IT)**

(74) Representative: **Whalley, Kevin et al**
**Marks & Clerk 57/60 Lincoln's Inn Fields**
**London WC2A 3LS (GB)**

Courier Press, Leamington Spa, England.

## Description

This invention relates to an elastomer composition based on EPDM rubber, in the form of a friable bale, and to a process for producing the same.

In the manufacture of synthetic elastomers, such as for example EPDM rubbers, the elastomeric material is produced in the form of crumbs, which are successively dried and then compressed into bales for storage. The bales, at the time of use, are broken down into crumbs for formulating blends or mixtures with other rubbers, various additives, vulcanizing or curing agents etc.

During storage, however, the weight of the stacked bales causes adhesion between the crumbs of the elastomer and an increase in the density of the bales, as a result of which considerable difficulties are experienced in utilizing such products for the above-mentioned mixing or compounding operations.

This drawback is particularly encountered when the manufacture of the bales starting from the elastomeric material crumbs is effected at a temperature higher than about 30°C, as occurs for example in the summer.

French Specification no. FR—A—2093589 relates to a process for obtaining pellets of ethylenepropylene- (diene) rubbers, suited for being stored in bags, which can be stacked without occurrence of adhesion of the pellets with each other, which consists in extruding the rubber in admixture with from 1 to 30% by weight based on the rubber of polyethylene, and then granulating the extruded product. The polyethylene used can be of the high or low-density type. The rubber has a Mooney viscosity at 100°C comprised between 20 and 100.

U.S. Patent No. US—A—3361850 relates to EPDM rubber compositions, which are made cold-flow resisting by admixture with up to 5% by weight of a branched, low-density polyethylene, having a melt index value comprised between 0.1 and 100. The thus treated EPDM rubber has a Mooney viscosity comprised between 10 and 100. Such compositions can be prepared by conventional procedures, such as dry mixing, or by blending solutions of the two components, and then isolating the mixture of solids by drum drying.

The present invention in one aspect provides an elastomeric composition, characterized by having a bulk density of 0.4 to 0.6 g/cm$^3$, and being produced by compaction of crumbs of a mixture of an elastomeric EPDM copolymer containing from 25% to 40% by weight of bound propylene, having a Mooney viscosity (ML-4/100°C) of 40 to 100 and a green strength value higher than 10 kg/cm$^2$, with from 3% to 5% by weight, calculated on the basis of the said copolymer, of low density ramified polyethylene having a melt index of from 0.1 to 100, the said crumbs having been obtained by extruding the said mixture which contains dispersed water, under flash conditions of water, so that the crumbs contain not more than 0.5% by weight of water.

The invention in another aspect provides a process for preparing a friable bale of an elastomeric composition, comprising preparing crumbs by extrusion of a mixture of an elastomeric EPDM copolymer containing from 25% to 40% by weight of bound propylene, having a Mooney viscosity (ML-4/100°C) of from 40 to 100 and a green strength value higher than 10 kg/cm$^2$, with from 3% to 5% by weight, calculated on the basis of the said copolymer, of low density ramified polyethylene having a melt index of 0.1 to 100, characterized by extruding the said mixture in the presence of therein dispersed water, under flash conditions of the water, to obtain crumbs containing not more than 0.5% by weight of water, and then compressing the crumbs into a bale having a bulk density of from 0.4 to 0.6 g/cm$^3$.

Thus it has now been found that it is possible to eliminate the above-described drawbacks by mixing the elastomer, prior to its breaking down into crumbs, with low density polyethylene (density from 0.91 to 0.93% g/cm$^3$), in amounts from 3% to 5% by weight referred to the elastomer, and then by compressing the crumbs into bales having a bulk density of 0.40 to 0.60 g/cm$^3$.

In this manner bales are obtained which are friable even after extended stacking periods, and also when they are manufactured at temperatures exceeding 30°C.

Elastomeric polymers employable for the purposes of the present invention are the ethylene/propylene/diene terpolymers containing from 25 to 40% by weight of copolymerized propylene, but preferably containing from 27 to 33% by weight of such monomer, and up to 10% by weight, preferably from 3 to 5% by weight, of a copolymerized non-conjugated dienic monomer. Representative examples of such dienic monomers are provided by the open-chain aliphatic diolefins, containing from 5 to 22 carbon atoms, in which the double bonds are separated by more than 2 carbon atoms, and containing at least one end double bond, and in addition by dicyclopentadiene, cyclooctadiene, 5-alkenyl substituted—2 norbornenes, 5-methylene-2-norbornene, and 2-alkyl-2,5-norbornadiene.

These elastomeric polymers exhibit green strength values higher than 10 kg/cm$^2$, preferably from 10 to 30 kg/cm$^2$, and have a Mooney viscosity (ML-4/100°C) from 40 to 100.

For the purposes of the present invention, the low density polyethylene is added to the elastomer in amounts from 3% to 5% referred to the elastomer weight. Such polyethylene is of the ramified type and exhibits melt index values within the range of 0.1 to 100.

The crumbs used to form the elastomeric composition are prepared according to conventional methods used for preparing crumbs of elastomeric material, starting from suspensions in water into which the elastomer coming from a reactor is discharged for the removal of the reaction organic solvents.

According to such methods, the structure in more or less porous crumbs is obtained by extrusion of

2

# 0 050 039

the elastomer under flash conditions of the residual liquid contained therein, consisting predominantly of water.

For preparing the crumbs it is sufficient to intimately mix the low density polyethylene, in an amount as defined above, with the elastomer before carrying out such extrusion.

The process may be suitably carried out as follows.

An organic suspension of the elastomer coming from a polymerization reactor is conveyed into water for removal of the organic solvent; the aqueous suspension then flows into an expeller working at 100°—120°C, where most of the water is removed and where the elastomer is simultaneously additioned and preliminarily mixed with polyethylene in granules or in powder form; the mixture is then sent to an expander working at a higher temperature than the polyethylene melting temperature, and such that the product leaving the expander, in the form of porous crumbs, contains not more than 0.5% by weight of water. Generally the expander operates at from 150°C to 220°C. The resulting product in the form of crumbs is then dried, compacted or compressed into bales having a density of from 0.4 to 0.6 g/cm³, and then enclosed into cartons, all these operations being preferably effected continuously, at temperatures even exceeding 30°C, without the product losing its friability and density characteristics during storage in stacks.

The invention will be further described with reference to the following illustrative Examples.

Example 1

For this preparation, use was made of an Anderson finishing apparatus, consisting of an expeller operating at 110°C and of an extruder (expander) operating at 200°C.

In the expeller, 3 parts by weight of low density ramified polyethylene, having a melt index of 21, were mixed with 100 parts by weight (calculated on dry weight) of an ethylene/propylene/ethylidenenorbornene terpolymer, having the following characteristics:

| | |
|---|---|
| Propylene content | =30% by weight |
| Ethylidenenorbornene content | =3.5% by weight |
| Mooney viscosity | =75 |
| Green strength | =20 kg/cm² |
| Water content | =20% |

A homogeneous mixture of the two polymers having a water content of 7% by weight referred to the mixture left the expeller.

Such mixture was extruded in the expander, whereby a product in the form of porous crumbs was obtained.

Two lots (a), (b) of such product were dried at temperatures of 35°C and 47°C respectively, and at such temperatures these lots were compressed into bales in a presser until a bulk density of 0.55 g/cm³ and 0.56 g/cm³ respectively was reached.

The operative conditions and the friability characteristics of the bales are given in the Table below.

Example 2

The procedure of Example 1 was repeated, except that the polyethylene content was 5% by weight and that the temperatures employed to form the bales were 32°C and 44°C respectively, the densities of the bales being respectively 0.46 g/cm³ and 0.5 g/cm³.

The friability characteristics of the bales are given in the Table below.

Example 3 (Comparative test)

The procedure of Example 1 was repeated, except that the elastomer was not additioned with polyethylene, the drying and packaging temperatures were 30°C and 35°C respectively, the bulk densities of the bales being 0.5 g/cm³ and greater than 0.6 g/cm³ respectively.

The characteristics of the bales are given in the Table below.

3

TABLE

| | Example | | | | | |
|---|---|---|---|---|---|---|
| | 1 | | 2 | | 3 | |
| | (a) | (b) | (a) | (b) | (a) | (b) |
| Polyethylene amount in the elastomer, parts by weight | 3 | 3 | 5 | 5 | 0 | 0 |
| Temperature employed to form the bales, °C | 35 | 47 | 32 | 44 | 30 | 35 |
| Bulk density of the bales, g/cm³ | 0.55 | 0.56 | 0.46 | 0.5 | 0.5 | >0.6 |
| Physical consistency of the bales | friable | friable | friable | friable | friable | compact |
| Processing time to obtain homogeneous blends or mixtures, minutes | 3.5 | 3.5 | 3.5 | 3.5 | 3.5 | 11.5 |

## Claims

1. An elastomeric composition, characterized by having a bulk density of 0.4 to 0.6 g/cm$^3$, and being produced by compaction of crumbs of a mixture of an elastomeric EPDM copolymer containing from 25% to 40% by weight of bound propylene, having a Mooney viscosity (ML-4/100°C) of 40 to 100 and a green strength value higher than 10 kg/cm$^2$, with from 3% to 5% by weight, calculated on the basis of the said copolymer, of low density ramified polyethylene having a melt index of from 0.1 to 100, the said crumbs having been obtained by extruding the said mixture which contains dispersed water, under flash conditions of the water, so that the crumbs contain not more than 0.5% by weight of water.

2. A composition as claimed in claim 1, characterized in that the elastomeric copolymer contains from 27% to 33% by weight of bound propylene.

3. A process for preparing a friable bale of an elastomeric composition, comprising preparing crumbs by extrusion of a mixture of an elastomeric EPDM copolymer containing from 25% to 40% by weight of bound propylene, having a Mooney viscosity (ML-4/100°C) of from 40 to 100 and a green strength value higher than 10 kg/cm$^2$, with from 3% to 5% by weight, calculated on the basis of the said copolymer, of low density ramified polyethylene having a melt index of 0.1 to 100, characterized by extruding the said mixture in the presence of therein dispersed water, under flash conditions of the water, to obtain crumbs containing not more than 0.5% by weight of water, and then compressing the crumbs into a bale having a bulk density of from 0.4 to 0.6 g/cm$^3$.

4. A process as claimed in claim 3, characterized in that the elastomeric copolymer contains from 27% to 33% by weight of bound propylene.

## Patentansprüche

1. Elastomer-Zusammensetzung, dadurch gekennzeichnet, daß sie eine Schüttdichte von 0,4 bis 0,6 g/cm$^3$ hat und hergestellt worden ist, indem man Bröckchen einer Mischung aus einem elastomeren EPDM-Copolymer, das 25 bis 40 Gew.-% gubundenes Propylen enthält, mit einer Mooney-Viskosität (ML-4/100°C) von 40 bis 100 und einem Festigkeitswert in unvulkanisiertem Zustand über 10 kg/cm$^2$ mit 3 bis 5 Gew.-%, berechnet auf der Basis des Copolymers, eines niedrig dichten, verzweigten Polyethylens mit einem Schmelzindex von 0,1 bis 100 verdichtet, wobei die Bröckchen erhalten worden sind durch Strangpression der dispergiertes Wasser enthaltenden Mischung unter Verdampfungsbedingungen für das Wasser, so daß die Bröckchen nicht mehr als 0,5 Gew.-% Wasser enthalten.

2. Zusammensetzung nach Anspruch 1, dadurch gekennzeichnet, daß das elastomere Copolymer 27 bis 33 Gew.-% gebundenes Propylen enthält.

3. Verfahren zur Herstellung eines leicht zu zerbröckelnden Ballens aus einer Elastomer-Zusammensetzung, das die Herstellung von Bröckchen durch Strangpression einer Mischung aus einem elastomeren EPDM-Copolymer, das 25 bis 40 Gew.-% gebundenes Propylen enthält, mit einer Mooney-Viskosität (ML-4/100°C) von 40 bis 100 und einem Festigkeitswert in unvulkanisiertem Zustand über 10 kg/cm$^2$ und 3 bis 5 Gew.-%, berechnet auf der Basis des Copolymers, eines niedrig dichten verzweigten Polyethylens mit einem Schmelzindex von 0,1 bis 100 umfaßt, dadurch gekennzeichnet, daß man die Mischung in Anwesenheit des darin dispergierten Wassers unter Verdampfungsbedingungen für das Wsser strangpreßt, um Bröckchen zu erhalten, die nicht mehr als 0,5 Gew.-% Wasser enthalten, worauf die Bröckchen zu einem Ballen mit einer Schüttdichte von 0,4 bis 0,6 g/cm$^3$ verdichtet werden.

4. Verfahren nach Anspruch 3, dadurch gekennzeichnet, daß das elastomere Copolymer 27 bis 33 Gew.-% gebundenes Propylen enthält.

## Revendications

1. Une composition élastomère, caractérisée en ce qu'elle présente une densité apparente de 0,4 à 0,6 g/cm$^3$ et en ce qu'elle est produite par compactage de fragments d'un mélange d'un copolymère EPDM élastomère contenant de 25% à 40% en poids de propylène lié, présentant une viscosité Mooney (ML-4/100°C) de 40 à 100 et une résistance initiale supérieure à 10 kg/cm$^2$, et contenant 3 à 5% en poids exprimés par rapport audit copolymère, d'un polyéthylène ramifié de basse densité présentant un indice de fusion compris entre 0,1 et 100, ces fragments ayant été obtenus par extrusion dudit mélange qui contient de l'eau dispersée, dans des conditions d'évaporation brusque de l'eau, de sorte que les fragments ne contiennent pas plus de 0,5% d'eau.

2. Une composition selon la revendication 1, caractérisée en ce que le copolymère élastomère contient de 25 à 33% en poids de propylène lié.

3. Un procédé de préparation d'une balle friable d'une composition élastomère consistant à préparer des fragments par extrusion d'un mélange de copolymères EPDM élastomers contenant de 25 à 40% en poids de propylène lié, présentant une viscosité Mooney (ML-4/100°C) comprise entre 40 et 100 et une résistance initiale supérieure à 10 kg/cm$^2$, avec de 3 à 5% en poids exprimés par rapport audit copolymère, de polyéthylène ramifié de basse densité présentant un indice de fusion de 0 à 100, caractérisé en ce qu'on extrude ledit mélange en présence de l'eau qui y est dispersée dans des conditions d'évaporation brusque de l'eau pour obtenir des fragments ne contenant pas plus de 0,5% en poids d'eau, et en ce que l'on comprime ensuite les fragments en formant des balles présentant une densité apparente comprise entre 0,4 et 0,6 g/cm$^3$.

4. Un procédé selon la revendication 3, caractérisé en ce que le copolymère et l'élastomère contiennent de 27% à 33% en poids de propylène lié.